# EUROPEAN PATENT APPLICATION

(11) **EP 3 214 834 A1**
(43) Date of publication of application: **06.09.2017**
(21) Application number: 15855745.4
(22) Date of filing: 20.10.2015
(51) Int. Cl.: H04N 5/91, G06T 7/20, G11B 27/10

(54) **PLAY SEGMENT EXTRACTION METHOD AND PLAY SEGMENT EXTRACTION DEVICE**

(30) Priority: 30.10.2014 JP 2014221070
(71) Applicant: Panasonic Intellectual Property Management Co., Ltd., Osaka-shi, Osaka 540-6207 (JP)
(72) Inventor: FUJIKAKE, Naomi, Osaka 540-6207 (JP); KAWAGUCHI, Kyoko, Osaka 540-6207 (JP)
(74) Representative: Eisenführ Speiser
(86) International application number: PCT/JP2015/005268
(87) International publication number: WO 2016/067553

(57) **Abstract**

A play segment extraction method or a play segment extraction device extracts a play segment of sports recorded in a sports video using a processor. The processor identifies a referee in a sports video, estimates a posture of the identified referee, estimates an operation of the referee from the estimated posture, and extracts a play segment, based on the estimated operation of the referee. Thereby, it is possible to accurately extract the play segment.

## Description

### TECHNICAL FIELD

The present disclosure relates to play segment extraction method and device of sports.

### BACKGROUND ART

PTL 1 discloses a scene segment dividing device of sports. The scene segment dividing device divides a scene segment, using a sign of a referee. Thereby, it is possible to divide a scene segment.

### Citation List

### Patent Literature

PTL 1: Japanese Patent No. 4839226

### SUMMARY OF THE INVENTION

The present disclosure provides a method of accurately extracting a play segment and a device thereof.

A play segment extraction method or a play segment extraction device according to the present disclosure extracts a play segment of sports recorded in a sports video using a processor. The processor identifies a referee in the sports video, estimates a posture of the identified referee, estimates an operation of the referee from the estimated posture, and extracts a play segment, based on the estimated operation of a referee.

The play segment extraction method or the play segment extraction device according to the present disclosure can accurately extract a play segment.

### BRIEF DESCRIPTION OF DRAWINGS

FIG. 1 is a diagram illustrating an example of a configuration of a play segment extraction device according to exemplary embodiment 1.
FIG. 2 is a flowchart illustrating play segment extraction processing according to exemplary embodiment 1.
FIG. 3 is a flowchart illustrating processing of identifying a referee in a frame according to exemplary embodiment 1.
FIG. 4 is a diagram illustrating processing of estimating a posture of the referee according to exemplary embodiment 1.
FIG. 5 is a diagram illustrating processing of estimating the operation of the referee according to exemplary embodiment 1.
FIG. 6 is a diagram illustrating processing of extracting a play segment from the estimated operation of the referee according to exemplary embodiment 1.
FIG. 7 is a flowchart illustrating play segment extraction processing according to another exemplary embodiment.

### DESCRIPTION OF EMBODIMENTS

Hereinafter, exemplary embodiments will be described in detail with reference to suitable drawings. However, detailed description more than necessary may be omitted. For example, detailed description on well-known matters or repeated description on substantially the same configuration may be omitted. This is for avoiding unnecessary redundancy of the following description and for the skilled in the art to easily understand.

The inventors provide accompanying drawings and the following description such that the skilled in the art sufficiently understand the present disclosure, and these are not intended to limit the subject described in the scope of claims.

### (EXEMPLARY EMBODIMENT 1)

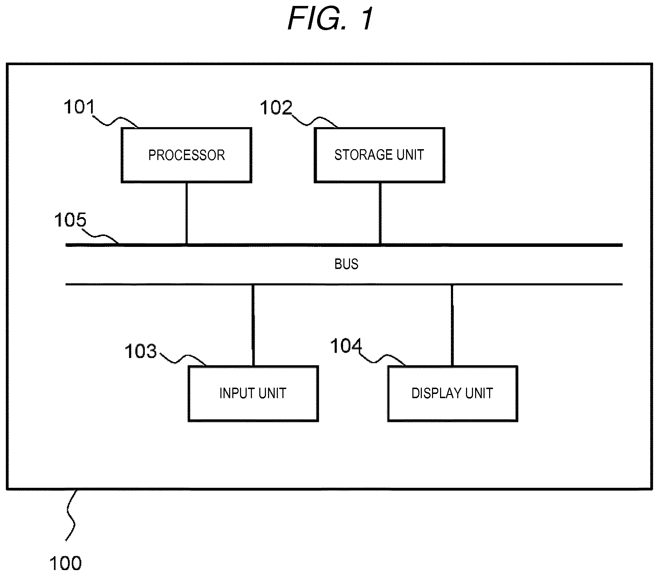

Hereinafter, exemplary embodiment 1 will be described with reference to FIG. 1 to FIG. 6.

### [1-1. Configuration]

FIG. 1 is a diagram illustrating an example of a configuration of a play segment extraction device according to exemplary embodiment 1.

Play segment extraction device 100 includes processor 101, storage unit 102, input unit 103, display unit 104, and bus 105.

Processor 101 controls other configuration elements of the play segment extraction device by performing arithmetic.

Storage unit 102 stores information temporarily or permanently. Storage unit 102 has a concept of such as a read only memory (ROM) or a random access memory (RAM). Play segment extraction device 100 may include multiple storage units 102 according to necessity of usage or access speed. Storage unit 102 can be configured by employing a hard disk drive (HDD), a synchronous dynamic random access memory (SDRAM), or the like.

Input unit 103 receives an external signal. Input unit 103 has a concept of such as an input device or an input interface. Input unit 103 can be configured by employing an input device of such as a mouse or a keyboard, and an input interface of such as a communication port or a wireless communication device.

Display unit 104 externally displays information. Display unit 104 can be configured by employing a liquid crystal display or the like.

Bus 105 connects respective elements configuring play segment extraction device 100 to each other. Bus 105 can be configured within processor 101 by being integrated into processor 101. Bus 105 may connect the respective elements to each other over wires or may wirelessly connect the respective elements.

The configuration of play segment extraction device 100 described above is an example. Hence, play segment extraction device 100 may be configured by adding other configuration elements to the aforementioned configuration. In addition, play segment extraction device 100 may be configured by removing a part of the configuration elements from the aforementioned configuration if necessary. In addition, play segment extraction device 100 may be configured by integrating the aforementioned configuration elements into each other. In addition, play segment extraction device 100 may be configured by using a part of the aforementioned configuration elements.

### [1-2. Operation]

An operation of play segment extraction device 100 configured as described above will be described.

In a case where there is no description in particular in the operation of play segment extraction device 100 which will be described below, processor 101 performs steps thereof as a main element.

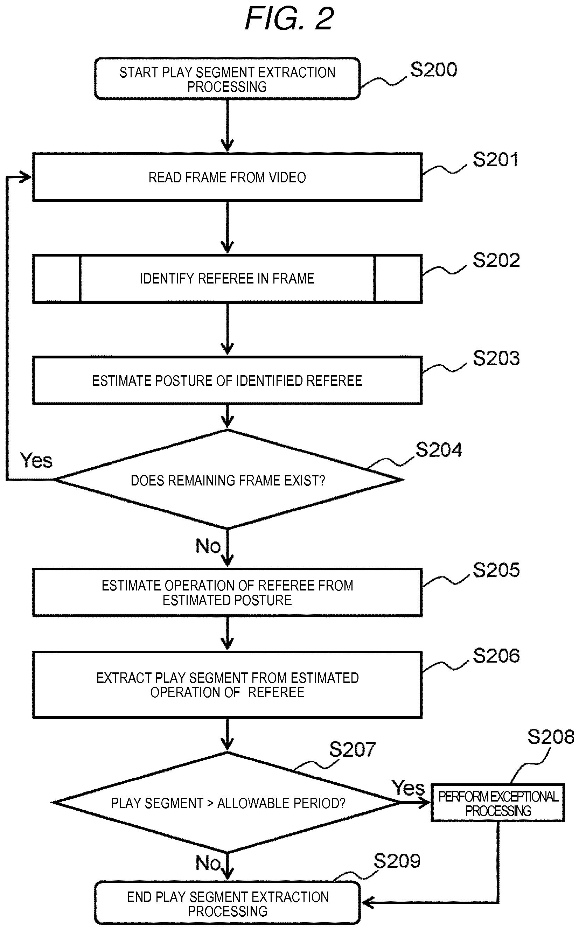

FIG. 2 is a flowchart illustrating play segment extraction processing according to exemplary embodiment 1.

In step S200, play segment extraction device 100 starts play segment extraction processing. The play segment extraction processing may automatically start at predetermined timing, or may start as a predetermined application is executed by play segment extraction device 100.

In step S201, processor 101 reads a frame from a video. In the present exemplary embodiment, the video is assumed to be a sports video of an American football game. In addition, the sports video is assumed to be imaged by a wide-angle high-resolution camera installed in the front center of an American football field. The video is assumed to be configured by successive images of 60 frames per second. This video is called the frame. The video may be input from input unit 103 or may be stored in advance in storage unit 102. In step S201, a first frame of the frames configuring the video is read by processor 101. The read frame is temporarily stored in storage unit 102. In step S201, processor 101 does not need to necessarily read the first frame of the video, and may read an arbitrary frame located at the middle or the like of the video. The sports video is not limited to a video of the American football game. The sports video may be a video of a game of such as baseball, volleyball, soccer, hockey, tennis, basketball, or martial art.

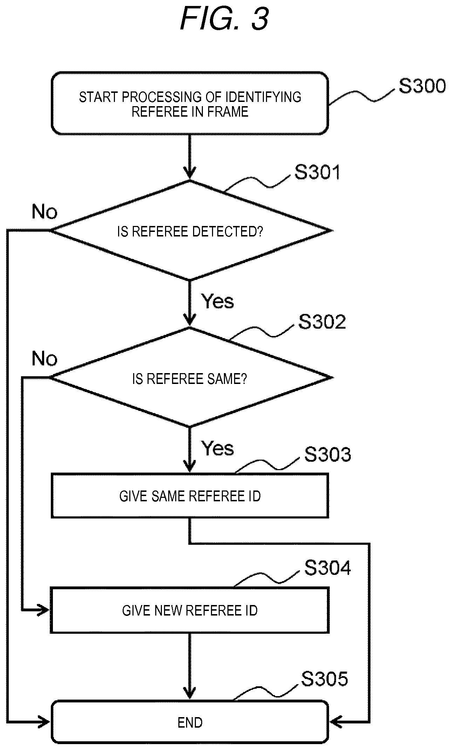

In step S202, processor 101 identifies a referee in the frame. Hereinafter, detailed description will be made with reference to FIG. 3.

FIG. 3 is a flowchart illustrating processing of identifying the referee in the frame according to exemplary embodiment 1.

In step S300, processor 101 starts processing of identifying the referee in the frame. In the present exemplary embodiment, step S300 is assumed to start at the same time as step S202.

In step S301, processor 101 detects the referee in the frame. A known person recognition method can be employed for a method of detecting the referee. In the present exemplary embodiment, a person recognition method which uses machine learning will be described as an example of the person recognition method. The person recognition method which uses the machine learning is a method of recognizing a person by fitting an image of a recognition target into a discriminant obtained by using correct data and incorrect data. Here, the correct data is an image showing a recognition target, and the incorrect data is an image showing items other than the recognition target. A large amount of correct data and incorrect data are collected in the machine learning. Feature data is extracted from each piece of the collected data. A discriminant which uses the feature data as variables is generated from the extracted feature data. When person recognition is performed, the feature data extracted from a captured image is inserted into the discriminant. It is determined whether or not the image is a recognition target from the numerical value obtained by the insertion. In the present exemplary embodiment, the machine learning is performed by setting an image generated by capturing the referee as the correct data, and setting an image generated by capturing a person (player or the like) other than the referee as the incorrect data. In step S301, feature data obtained from a partial region of a frame (image) is fit into the discriminant, and thereby it is discriminated whether or not there is the referee in the region. The reason why the referee is detected by using the partial region of the frame not the entire region is that resolution of the frame is higher than resolution of an image used for the machine learning.

In step S302, processor 101 determines whether or not the referee detected in step S301 is the same as the referee detected so far. A method of using a detection region will be described as an example of a method of determining whether or not the referee is the same. In step S301, processor 101 determines whether or not the referee is in the partial region of the frame. Step S301 to step S305 (step S202) illustrated in FIG. 3 are processing repeated for plural times. Hence, in step S302, processor 101 stores information on the referee detected in step S301 in storage unit 102. Specifically, processor 101 stores a set of a referee ID indicating the detected referee and coordinates indicating a region where the referee stays, in storage unit 102. In step S302 after a second time, processor 101 determines whether or not coordinates of the referee detected in step S301 immediately before are included in the periphery of the coordinates of the referee stored in storage unit 102 so far, and thus, processor 101 can determine whether or not the referee detected in step S301 is the same as the referee detected so far.

In a case where the coordinates of the referee (referee A) detected in step S301 are included in the periphery of coordinates of a referee (referee B) stored in storage unit 102 so far (Yes in step S302), processor 101 sets a referee ID of referee B and the coordinates of referee A as one set. That is, the same referee ID as that of referee B is given to referee A. The coordinates and the referee ID of referee A are stored in storage unit 102 (step S303).

In a case where the coordinates of the referee (referee A) detected in step S301 is not included in the periphery of the referee (referee B) stored in storage unit 102 so far (No in step S302), processor 101 sets a new referee ID and the coordinates of referee A as one set. That is, the new referee ID is given to referee A. The coordinates and the referee ID of referee A are stored in storage unit 102 (step S304).

In a case where the referee is not detected in step S301 (No in step S301), in a case where the same referee ID is given (step S303), and in a case where new referee ID is given (step S304), processing of identifying a referee in a frame ends (step S305).

Step S203 of play segment extraction processing will be described with reference to FIG. 2 again.

In step S203, processor 101 estimates a posture of the identified referee. The identified referee is the referee identified in step S202. Hence, while not illustrated, in a case where the referee is not identified in step S202, processing of step S203 can be omitted.

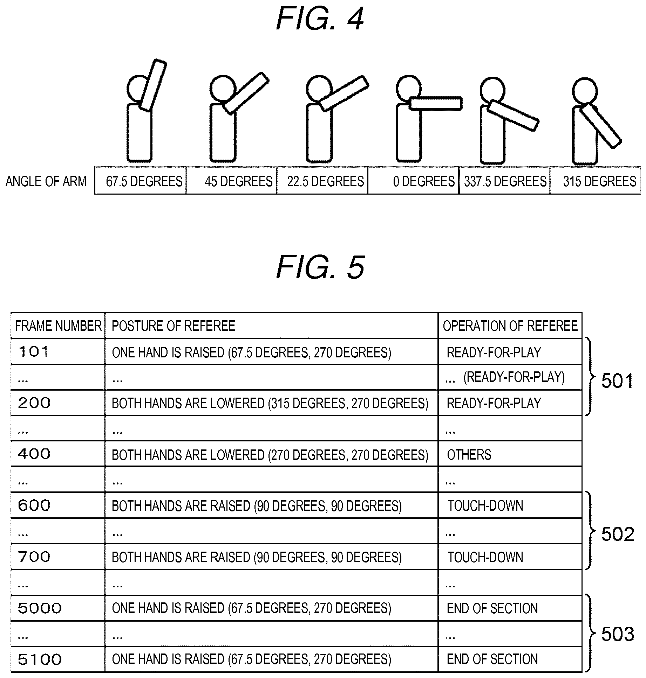

FIG. 4 is a diagram illustrating processing of estimating the posture of the referee according to exemplary embodiment 1. In the present exemplary embodiment, processing of using a method which uses the machine learning described in explanation of the person recognition method of step S301 will be described as description on processing of estimating the posture of the referee. Overview of the machine learning is described in the explanation of step S301, and thus, a part of the description may be omitted in the following description.

In the present exemplary embodiment, the posture of the referee is classified for each specific pattern. There is a method of classifying for each angle of an arm of the referee, as an example of a method of classifying for each specific pattern. The method of classifying for each angle of the arm of the referee is a method of classifying the angles of the arm of the referee on 22.5 degree basis, as illustrated in FIG. 4. While being omitted for the sake of brief drawing, the angle of the arm is classified for each angle of both arms. That is, angles of the arm of the referee are classified like "the right arm (one arm) is set at ** degree angle and the left arm (the other arm) is set at ** degree angle". In the present exemplary embodiment, the machine learning is performed in advance by setting an image with an arm raised at the angle as the correct data, and an image with an arm raised at an angle other than the angle as the incorrect data, for each classified angle of the arm.

Processor 101 classifies an image of the referee identified in step S202 for each angle of the arm in step S203, based on the discriminant obtained from the machine learning, and thus, the identified posture of the referee is estimated. Estimating the posture of the referee using the angle of the arm is an example, and the posture of the referee may be estimated by using other methods. However, it is preferable that, in a case where a segment of a sports video in which an angle of an arm of a referee is closely related to an operation of the referee like the American football is extracted, the angle of the arm of the referee is used.

Step S204 of play segment extraction processing will be described with reference to FIG. 2 again.

In step S204, processor 101 determines whether or not there is a remaining frame. If the video is in the middle, there are remaining frames (Yes in step S204), and thus, the processing returns to step S201. If the frame of the video reaches the last frame, there is no remaining frame (No in step S204), and thus, the processing proceeds to step S205.

In step S205, processor 101 estimates an operation of the referee from the estimated posture of the referee. The estimated posture of the referee is the posture of the referee estimated in step S203.

FIG. 5 is a diagram illustrating a method of estimating the operation of the referee according to exemplary embodiment 1.

It is assumed that data representing a table illustrated in FIG. 5 is stored in storage unit 102.

The sequence of frames is described in a column in which "frame number" is described.

The posture of the referee estimated from the frame corresponding to the frame number in step S203 is described in the column described as "posture of referee".

An operation of the referee estimated from the posture of the referee is described in the column described as "operation of referee".

Columns of "frame number" and "posture of referee" are stored in storage unit 102 by processor 101 until the time immediately before step S205 is processed.

Processor 101 estimates "operation of referee" based on transition of "posture of referee". Processor 101 stores the estimated "operation of referee" in storage unit 102 in association with "frame number" and "posture of referee".

An example of a method by which processor 101 estimates "operation of referee" based on the transition of "posture of referee" will be described. In the present exemplary embodiment, a method of estimating "operation of referee" based on the transition of "posture of referee" using a look up table (LUT) will be described. The LUT is a virtual data structure stored in storage unit 102. Patterning of the transition of the posture of the referee and the operation of the referee are recorded in the LUT in association with each other as definition. The transition of the posture of the referee is represented as the expression, for example, "one hand is raised and lowered" or "both hands continue to raise". Processor 101 determines whether or not the transition of the posture of the referee emerges as a predetermined pattern defined in the LUT from the column of "frame number" and "posture of referee". In a case where the transition of the posture of the referee emerges as the predetermined pattern defined in the LUT, processor 101 estimates that a predetermined operation of the referee is performed. The operation of the referee is an operation denoting determination that the referee performs, such as "ready-for-play" or "touch-down".

For example, transition 501 of the posture of the referee in FIG. 5 is transition of a posture of a referee, such as, the referee raises one hand (frame number 101), the referee gradually lowers one hand (frame numbers 101 to 199 (not illustrated)), or the referee ends lowering one hand (frame number 200). Meanwhile, the transition of the posture of the referee, such as, the referee raises one hand, the referee gradually lowers one hand, or the referee ends lowering one hand, is patterned, and recorded in the LUT of storage unit 102 in association with the operation of the referee, such as "ready-for-play". Processor 101 detects that transition 501 of the posture of the referee coincides with the pattern of the transition of the referee in the LUT, and thus, estimates that the operation of the referee, such as "ready-for-play", associated with the pattern is performed. Processor 101 records transition 501 of the posture of the referee and the operation of the referee such as "ready-for-play" in storage unit 102 in association with each other.

In the same manner, transition 502 of the posture of the referee in FIG. 5 is transition of the posture of the referee, such as, the referee raises both hands (frame number 600), the referee maintains posture of raised both hands (frame numbers 401 to 699 (not illustrated)), or the posture of raised both hands is maintained for a predetermined period (frame number 700). Processor 101 estimates that the operation of the referee, such as "touch-down", is performed by transition 502 of the posture of the referee by referring the LUT. Processor 101 records transition 502 of the posture of the referee and the operation of the referee such as "touch-down" in storage unit 102 in association with each other.

In the same manner, transition 503 of the posture of the referee in FIG. 5 is transition of the posture of the referee, such as, the referee raises one hand (frame number 5000), the referee maintains posture of raised both hands (frame numbers 5001 to 5099 (not illustrated)), or the posture of raised both hands is maintained for a predetermined period (frame number 5100). Processor 101 estimates that the operation of the referee, such as "end of section (quarter)", is performed by transition 503 of the posture of the referee by referring the LUT. Processor 101 records transition 503 of the posture of the referee and the operation of the referee such as "end of section" in storage unit 102 in association with each other.

Operations of the referee other than the aforementioned operations are also patterned, and recorded in storage unit 102 as the LUT. Hereinafter, representative things will be exemplified together with the transition of the operation of the referee.
Time-in: one hand is turned.
Time-out: both hands are raised and crossed.
Safety: both hands are matched over the head.
Loss-of-down: both hands are matched in the back of the head.
Unsuccessfulness: both hands are crossed in front of the chest.

Estimating the angle of the arm of the referee and estimating the operation of the referee based on the estimated angle of the arm, using processor 101 is one of examples in which processor 101 estimates the operation of the referee from the posture of the referee. Hence, estimating an operation of a referee from a posture of the referee using other methods by processor 101 is also included in the present disclosure. For example, processor 101 may estimate the operation of the referee from the posture of the referee by using the known machine learning method. In addition, processor 101 may estimate the operation of the referee from the posture of the referee by using the known pattern recognition method. However, as described in the present exemplary embodiment, if processor 101 estimates the angle of the arm of the referee and estimates the operation of the referee based on the estimated angle of the arm, since a referee of sports performs an operation using an arm in general, estimation accuracy of the operation of the referee increases. In order to more accurately estimate the operation of the referee, the posture of the referee may be estimated from a position of the arm of the referee in addition to the angle of the arm of the referee. By doing so, the operation of the referee which is relatively unidentified only by the angle of the arm such as "time-out" and "unsuccessfulness" can be easily identified.

In step S206, processor 101 extracts a play segment from the estimated operation of the referee. The operation of the referee is the operation of the referee estimated in step S205. The play segment is a segment where a start point and an end point of the operation of the referee are set at one segment of the sports video.

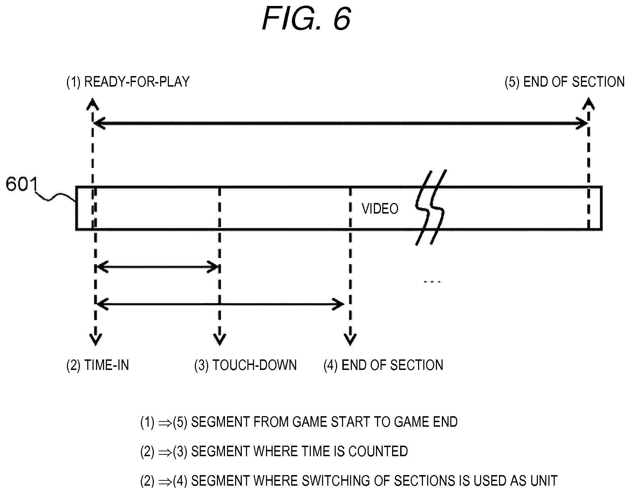

Description on processing of extracting a play segment from the estimated operation of the referee by processor 101 will be made with reference to FIG. 6. FIG. 6 is a diagram illustrating the processing of extracting the play segment from the estimated operation of the referee according to exemplary embodiment 1. In FIG. 6, video 601 is assumed to illustrate the entire video segment of a sports video. In FIG. 6, (1) ready-for-play, (2) time-in, (3) touch-down, (4) end of section, and (5) end of section are respectively the postures of the referee estimated in step S205. FIG. 6 illustrates at which point of time a posture of each referee corresponds to the posture of the referee in the video 601.

Processor 101 extracts a play segment from an operation of a referee, based on attributes of the play segment. The attributes of the play segment are given based on the results in which classification is performed for the play segment. The classification of the play segment can be performed arbitrarily, but it is preferable that the play segment is set to a meaningful segment in the sports rule which becomes a target of segment extraction. In the present exemplary embodiment, the attributes of the play segment are defined and recorded in storage unit 102. In the present exemplary embodiment, an example of the defined attributes of the play segment will be described together with an example of the operation of the referee at the start point and the end point.

There is a "segment from game start and game end" as an example of the attributes of the play segment. The sports video generally records a video of exercise or the like before the game start, or a video of ceremony after the game end. In a case where a user of play segment extraction device 100 has interest only in a segment where a game is actually played in the sports video, it is useful to extract the "segment from the game start to the game end" from the sports video. If an American football is used as an example, an example of an operation of a referee is used in which "ready-for-play" emerging first in video 601 is a start point in the "segment from the game start to the game end". Another example of the operation of the referee is used in which "end of section" emerging last in video 601 is an end point. In FIG. 6, a segment from (1) ready-for-play to (5) end of section is the "segment from the game start to the game end". Processor 101 detects "ready-for-play" emerging first and "end of section" emerging last in video 601 from the operation of the referee recorded in storage unit 102, thereby, extracting the "segment from the game start to the game end" as the play segment.

There is a "segment where time is counted" as another example of the attributes of the play segment. Most actual play is performed in the "segment where time is counted" in the sports such as an American football. In a case where a user of play segment extraction device 100 has interest only on a segment where actual play is performed, it is useful to extract the "segment where time is counted" from the sports video. If the American football is used as an example, an example of an operation of a referee is used in which the "time-in" emerging each time in video 601 is a start point in the "segment where time is counted". Another example of the operation of the referee is used in which the "touch-down" or "time-out" emerging each time subsequent to the "time-in" in video 601 is an end point. In FIG. 6, a segment from (2) time-in to (3) touch-down is the "segment where time is counted". Processor 101 detects the "time-in" emerging each time in video 601 and the "touch-down" or "time-out" emerging each time subsequent to the time-in, from the operation of the referee recorded in storage unit 102, thereby, extracting the "segment where time is counted" as the play segment. The sports video generally includes lots of "segment where time is counted".

There is a "segment where switching of sections is used as a unit" as another example of the attributes of the play section. The section is temporal mass configuring sports, and includes the first half and the second half of soccer, and quarters of the American football. In a case where the user of play segment extraction device 100 has interest only on play of a specific section, it is useful to extract the "segment where switching of sections is used as a unit" from the sports video. If the American football is used as an example, an example of an operation of a referee is used in which the "time-in" emerging first or the "time-in" emerging shortly after the "end of section" in video 601, is a start point in "time when switching of sections is used as a unit". An example of the operation of the referee is used in which the "end of a section" is an end point in video 601. In FIG. 6, from (2) time-in to (3) end of section is the "segment where switching of sections is used as a unit". Processor 101 detects the "time-in" or the "end of section" from the operation of the referee recorded in storage unit 102, thereby extracting the "segment where switching of sections is used as a unit".

The aforementioned attributes of the play segment are an example. The attributes of the play segment can be set as various types according to a type or the like of the sports. For example, a "segment where switching of offense and defense is used as a unit" may be set as the attributes of the play segment in team fighting sports. In addition, a "segment where play (of actual player) is not performed" may be set as the attributes of the play segment. That is, in the present disclosure, the play includes movement of people before and after the play of the actual player is performed, in addition to a concept in which the play of the actual player is performed.

In step S207, processor 101 confirms whether or not a length of the play segment exceeds an allowable period. The length of the play segment is a temporal length of the play segment extracted in step S206. The allowable period is a period specified with respect to the play segment or the attributes of the play segment. Since estimation processing which uses a video is included in play segment extraction processing according to the present disclosure, there is a possibility that processor 101 incorrectly extract the play segment. Step S207 is processing for detecting the play segment incorrectly extracted as described above. For example, the "segment where time is counted" has an average length of five to six seconds, and a period exceeding one minute is abnormal. Hence, the allowable period such as 30 seconds with respect to the "segment where time is counted" is recorded in storage unit 102 in advance. Processor 101 determines whether or not the length of the "segment where time is counted" exceeds the allowable period in step S207. In a case where the length of the segment exceeds the allowable period (Yes in step S207), exceptional processing such as displaying the purport of warning on the display unit 104 is performed (step S208). After performing the exceptional processing, processor 101 performs any one processing of ending the play segment extraction processing or performing all or a part of steps S201 to S206 again. In a case where the length of the segment does not exceed the allowable period (No in step S207), processor 101 ends the play segment extraction processing (step S209).

### [1-3. Effect or the Like]

As described above, in the play segment extraction method or play segment extraction device according to the present exemplary embodiment, processor 101 extracts a play segment of sports recorded in a sports video. Processor 101 identifies a referee in the sports video, estimates the posture of the identified referee, estimates an operation of the referee from the estimated posture, and extracts the play segment, based on the estimated operation of the referee.

Thereby, it is possible to extract a play segment, based on an operation of a referee dominating the play segment of sports. Accordingly, it is possible to accurately extract the play segment.

In addition, in the present exemplary embodiment, processor 101 estimates the operation of the referee, based on transition of the estimated posture.

Thereby, it is possible to accurately estimate the operation of the referee. Accordingly, it is possible to more accurately extract the play segment.

In addition, in the present exemplary embodiment, processor 101 extracts the play segment from the operation of the referee, based on the attributes of the play segment.

Thereby, it is possible to extract the play segment according to an interest of a user of the play segment extraction device or the play segment extraction method.

In addition, in the present exemplary embodiment, the play segment can have at least one attribute of segments of at least the sports, such as, a segment from game start to game end, a segment where time is counted, and a segment where switching of sections is used as a unit.

Thereby, it is possible to extract the play segment with high and more specific usefulness.

In addition, in the present exemplary embodiment, processor 101 estimates an angle of an arm of the referee, and estimates an operation of the referee, based on the estimated angle of the arm.

Thereby, it is possible to more accurately estimate the operation of the referee. Accordingly, it is possible to more accurately extract the play segment.

In addition, in the present exemplary embodiment, processor 101 determines whether or not the extracted play segment exceeds an allowable period defined by a predetermined length.

Thereby, when the play segment is incorrectly extracted, it is possible to make warning or to extract the play segment again.

### (Another Embodiment)

As described above, exemplary embodiment 1 is described as an example of a technology of disclosing the present application. However, the technology of the present disclosure is not limited to this, and can also be applied to an embodiment in which modification, replacement, addition, omission, or the like is appropriately performed. In addition, it is possible to form a new embodiment by combining the respective configuration elements described in exemplary embodiment 1.

Hence, hereinafter, another exemplary embodiment will be described.

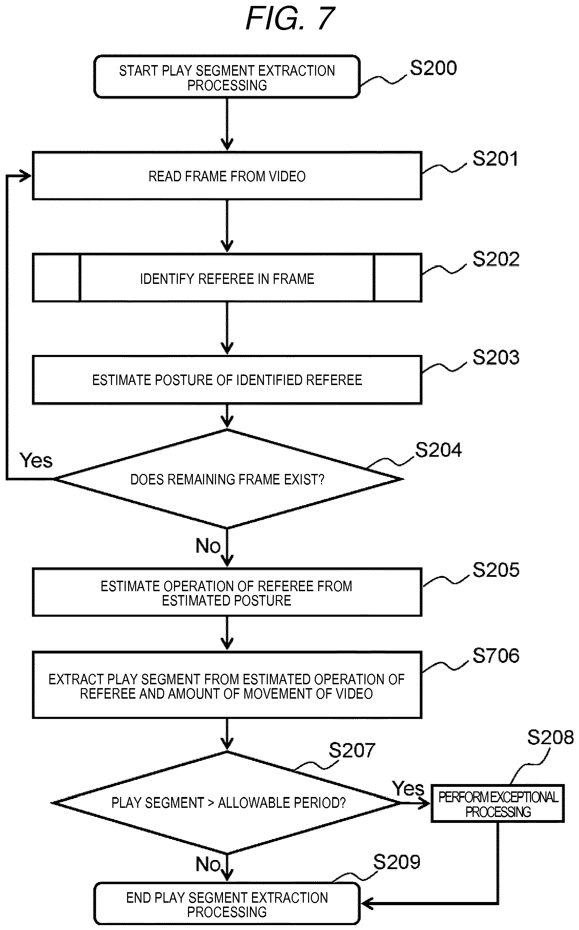

FIG. 7 is a flowchart illustrating play segment extraction processing according to another exemplary embodiment. In the exemplary embodiment 1, the play segment is extracted from the operation of the referee estimated by processor 101 in step S206. Here, as described in step S706, processor 101 may extract a play segment by adding the amount of movement of a video to an operation of a referee as a determination element. The amount of movement of the video is an index showing movement of an object in the video determined based on two or more successive frames. For example, an optical flow is known as a type of the amount of movement of the video. In the sports video, the amount of movement of the video decreases immediately before a predetermined play starts, increases shortly after the play starts, and decreases if the play ends, in general. Hence, it is possible to more efficiently extract the play segment by performing determination by adding a trend of the amount of movement of the video to the estimated operation of the referee by processor 101. An appropriate value as a trend of the amount of movement of the video may be recorded in storage unit 102 for each attribute of the play segment. By doing so, it is possible to describe a small amount of movement of the video in the middle of the play segment, a change of the amount of movement at a specified timing, or the like, in each frame segment. For example, in a case where there is a small amount of movement in the segment extracted because of being determined that play is performed, processor 101 determines that there is a possibility that the play is not performed in the segment, and thus, warning can be displayed on display unit 104. Thereby, it is possible for a user of play segment extraction device 100 to more efficiently confirm whether or not the play segment is correctly extracted.

As described above, exemplary embodiments are described as examples of a technology according to the present disclosure. Accordingly, accompanying drawings and detailed description are provided.

Hence, the configuration elements described in the accompanying drawings and the detailed description can include not only configuration elements essential for achieving the object, but also configuration elements inessential for achieving the object so as to exemplify the aforementioned technology. Accordingly, although the inessential configuration elements are described in the accompanying drawings and the detailed description, the inessential configuration elements should not be certified to be essential immediately.

In addition, the aforementioned exemplary embodiments exemplify the technology according the present disclosure, and various types of modifications, replacement, addition, omission, or the like can be performed within the scope of claims or an equivalent scope.

### INDUSTRIAL APPLICABILITY

The present disclosure can be applied to a device analyzing a sports video. Specifically, the present disclosure can be applied to a general computer or the like.

### REFERENCE MARKS IN THE DRAWINGS

- 100: play segment extraction device
- 101: processor
- 102: storage unit
- 103: input unit
- 104: display unit
- 105: bus
- 501: transition of posture of referee
- 502: transition of posture of referee
- 503: transition of posture of referee
- 601: video

## Claims

1. A play segment extraction method of extracting a play segment of sports recorded in a sports video using a processor, wherein the processor identifies a referee in the sports video, estimates a posture of the identified referee, estimates an operation of the referee from the estimated posture, and extracts a play segment, based on the estimated operation of the referee.

2. The play segment extraction method of claim 1, wherein the processor estimates the operation of the referee, based on transition of the estimated posture.

3. The play segment extraction method of claim 1,
wherein the play segment has multiple attributes, and
wherein the processor extracts a play segment from the estimated operation of the referee, based on the attributes of the play segment.

4. The play segment extraction method of claim 3, wherein the play segment includes at least one attribute, among a segment from game start to game end of the sports, a segment where time is counted in the sports, and a segment where switching of sections configuring the sports is used as a unit.

5. The play segment extraction method of claim 1, wherein the processor estimates an angle of an arm of the referee, and estimates an operation of the referee, based on the estimated angle of the arm.

6. The play segment extraction method of claim 1, wherein the processor determines whether or not the extracted play segment exceeds an allowable period defined by a predetermined length.

7. The play segment extraction method of claim 1, wherein the processor extracts the play segment, based on movement information in a sports video, in addition to the estimated operation of the referee.

8. A play segment extraction device extracting a play segment of sports recorded in a sports video, the device comprising:
a processor; and
an input unit inputting the sports video, and
wherein the processor identifies a referee in the sports video, estimates a posture of the identified referee, estimates an operation of the referee from the estimated posture, and extracts a play segment, based on the estimated operation of the referee.

9. The play segment extraction device of claim 8, wherein the processor estimates the operation of the referee, based on transition of the estimated posture.

10. The play segment extraction device of claim 8,
wherein the play segment has multiple attributes, and
wherein the processor extracts a play segment from the estimated operation of the referee, based on the attributes of the play segment.

11. The play segment extraction device of claim 10, wherein the play segment includes at least one attribute, among a segment from game start to game end of the sports, a segment where time is counted in the sports, and a segment where switching of sections configuring the sports is used as a unit.

12. The play segment extraction device of claim 8, wherein the processor estimates an angle of an arm of the referee, and estimates an operation of the referee, based on the estimated angle of the arm.

13. The play segment extraction device of claim 8, wherein the processor determines whether or not the extracted play segment exceeds an allowable period defined by a predetermined length.

14. The play segment extraction device of claim 8, wherein the processor extracts the play segment, based on movement information in a sports video, in addition to the estimated operation of the referee.
